(19) Europäisches Patentamt

European Patent Office

Office européen des brevets

(11) Publication number: **0 270 097 B1**

# EUROPEAN PATENT SPECIFICATION

(45) Date of publication of patent specification: 02.05.91

(51) Int. Cl.⁵: **B62D 43/10**, B62D 25/08

(21) Application number: 87117829.9

(22) Date of filing: 02.12.87

(54) Body for motor-vehicle.

(30) Priority: 05.12.86 IT 5416986 U

(43) Date of publication of application:
08.06.88 Bulletin 88/23

(45) Publication of the grant of the patent:
02.05.91 Bulletin 91/18

(84) Designated Contracting States:
DE ES FR GB SE

(56) References cited:
DE-A- 3 339 415
DE-A- 3 531 543
DE-B- 2 827 855
DE-B- 2 840 689
US-A- 4 093 088

(73) Proprietor: FIAT AUTO S.p.A.
Corso Giovanni Agnelli 200
I-10135 Torino(IT)

(72) Inventor: Di Giusto, Nevio
Via Guarini, 48
I-10078 Venaria(IT)

(74) Representative: Prato, Roberto et al
STUDIO TORTA Società Semplice Via Viotti 9
I-10121 Torino(IT)

## Description

The present innovation is related to a body for motor-vehicle, which covers few very simple-shape parts which can be connected between each other through very fast assembly operations, and which can thus be produced at low cost.

In particular, the innovation finding is related to the structure of a body rear end which, as it is well known, usually is very complicated and includes a variety of longitudinal members and crossmembers properly connected between each other, at least a pair of side panels connected to the previous ones, and a platform consisting of more different parts, properly connected between each other and with the previous ones (see i.e. DE-B-2827855).

Because of both the high number of parts making up the rear portion of a body and the complexity of assembly operations necessary to connect between each other said parts, the cost of a conventional body of the type shown proves to be rather high.

The scope of the present innovation is to accomplish a body, and in particular the rear end of the body itself, which includes a few simple-shape parts, suited to be quickly connected between each other and which can therefore be produced at low cost.

Such a scope is fulfilled through a motor-vehicle body comprising a rear end which includes a pair of side panels, a pair of longitudinal members each of which is adjacent to one of said side panels and is connected to the side panel itself, a pair of crossmembers substantially orthogonal to said longitudinal members of which one is arranged in the rear end and the other is arranged in the central portion of the body, and a plastic panel with a substantially rectangular shape so arranged as to rest on both said longitudinal members and said crossmembers to determine the rear end of the body platform, said panel being as least provided with a recess suited to accommodate a spare wheel and a further recess suited to accommodate a fuel tank.

For a better understanding of the finding referred to in the present innovation, a more detailed description of it will be given as a way of example with reference to the attached drawings, where:

- Fig. 1 represents a pictorial view of a body rear end built according to the present innovation;

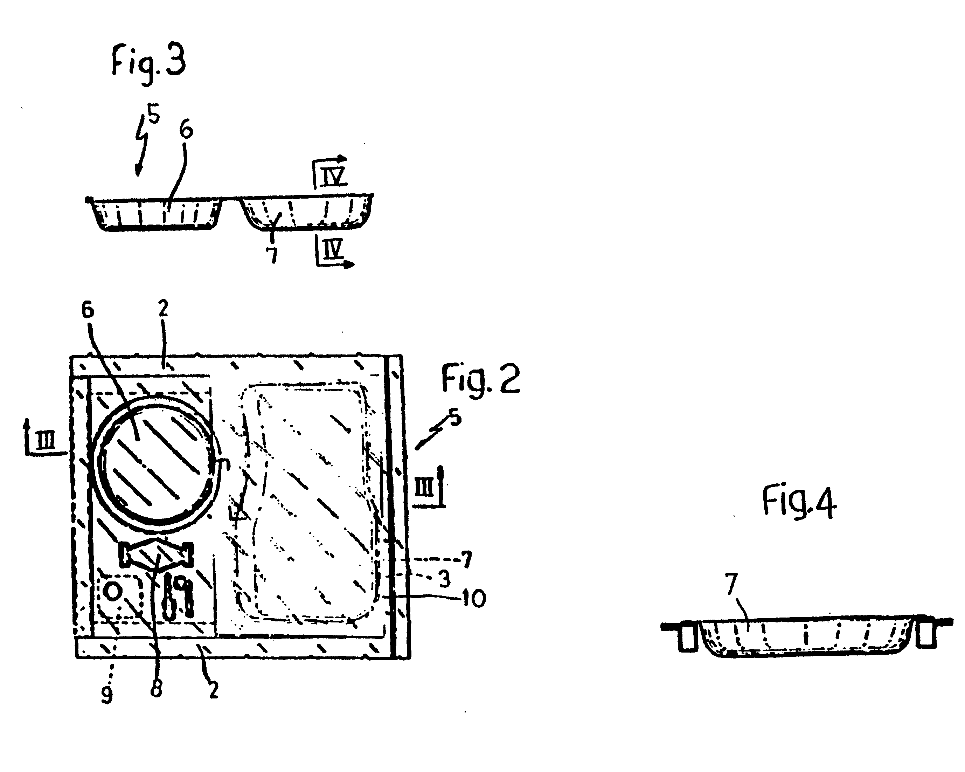

- Fig. 2 represents a plan view of the portion shown in Fig. 1;
- Fig. 3 represents a schematic section of the body referred to in Fig. 2 carried out by a III-III intersecting plane;
- Fig. 4 represents a cross section of the body portion referred to in Fig. 3 carried out by a IV-IV intersecting plane;
- Fig. 5 represents a plan view of an additional accomplishment form according to the present innovation;
- Fig. 6 is a schematic section of the Fig. 5 accomplishment carried out by a VI-VI intersecting plane;
- Fig. 7 is a section of the body portion referred to in Fig. 6 carried out by a VII-VII intersecting plane;
- Fig. 8 represents a plan view of a third accomplishment form according to the present innovation;
- Fig. 9 is a schematic section of the body referred to in Fig. 8 carried out by a IX-IX intersecting plane;
- Fig. 10 is a section of the body portion referred to in Fig. 9 carried out by an X-X intersecting plane;
- Fig. 11 is a schematic developed section of the body referred to in Fig. 9

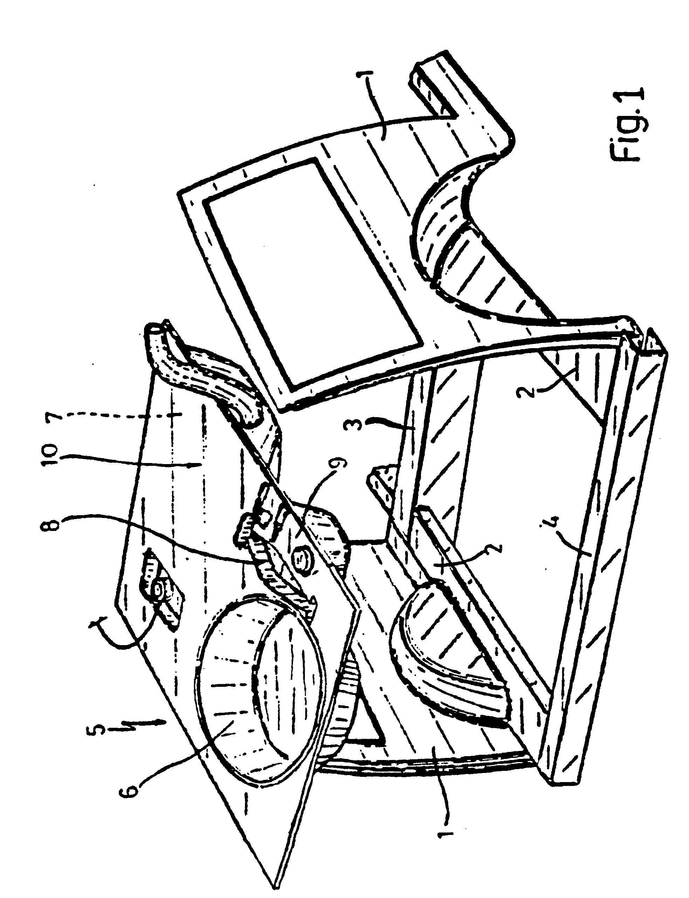

With reference to Fig. 1, the rear portion of the model body includes two side panels 1, two longitudinal members 2, each of which is close to a side panel and is connected to the latter, a pair of crossmembers 3 and 4 arranged in the body central portion and rear portion, respectively. The body also includes a plastic panel 5 so arranged as to rest on the longitudinal members and on crossmemebers 2, 3 and 4 to determine the rear end of the platform; the above panel is at least provided with a pair of recesses 6 and 7 suited to originate two housings, one of them to accommodate a spare wheel and the other to accommodate a fuel tank; in a proper way, such further housing can in itself be the fuel tank.

The panel can also include further recesses 8 and 9, the former suited to originate the housings for the vehicle's tool kit and the latter to originate a liquid reservoir for the glass washing device.

The panel 5 and its cover 10 can be obtained through a blowing technology from a single plastic piece by using, for instance, the usual forming technologies through blowing.

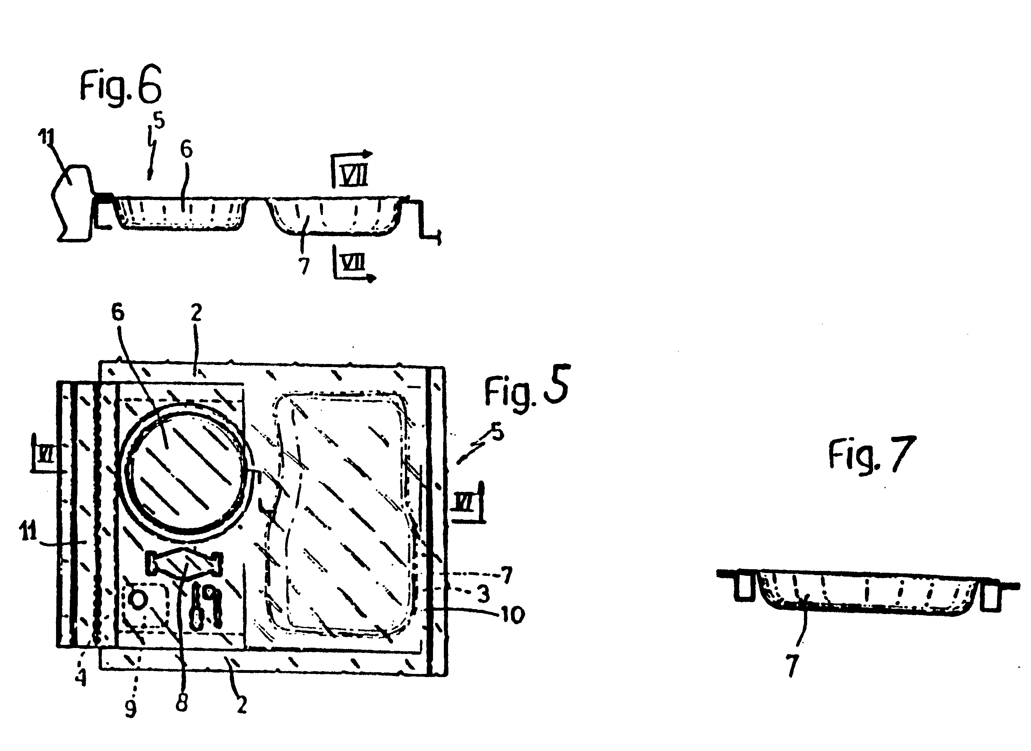

In a additional form of accomplishment shown in Figs. 5 through 7, the panel 5 presents a rear edge 11, substantially bent into box-like shape and so arranged as to rest on the rear crossmember to originate the rear bumper of the motor-vehicle.

In a further form of accomplishment according to Figures from 8 through 11, the panel 5 can include a seat 12 obtained from a single piece with the panel 5 can include a seat 12 obtained from a single piece with the panel itself; in this case, the seat will have a structure as to be obtained through the same process as the one through which the panel itself is obtained and is connected to the latter by a deformable bridge 13, directly obtained from the local forming of the panel 5.

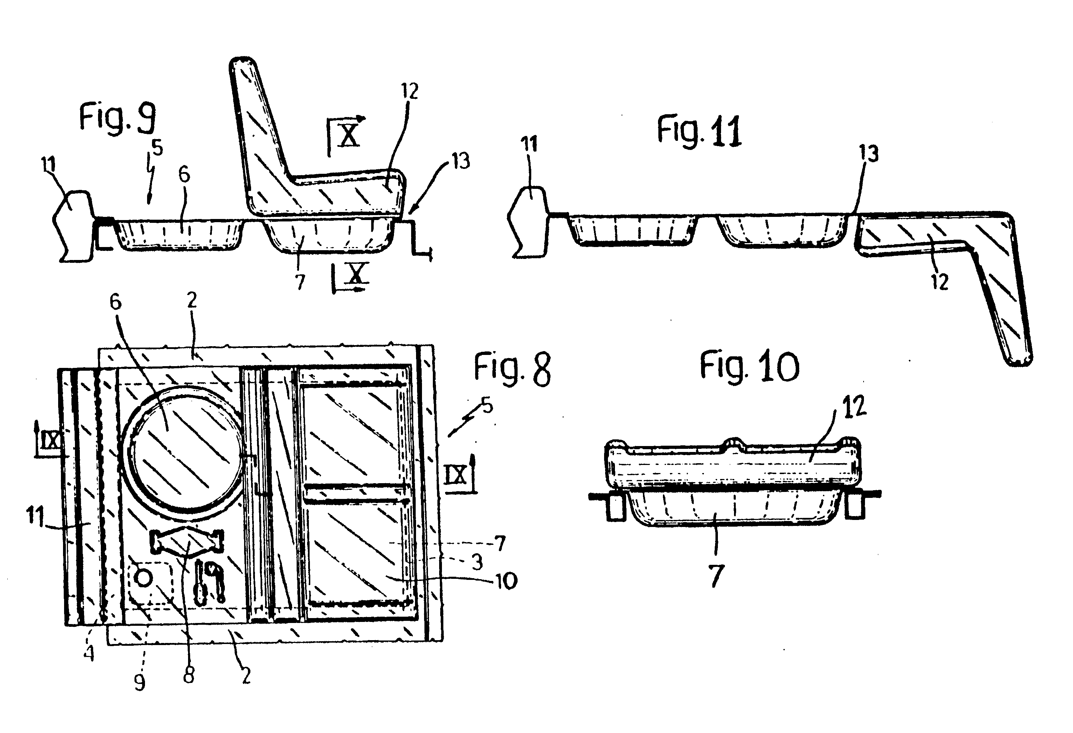

Thus after the forming operation, the seat is in the configuration shown on Fig. 11 and can be rotated around the bridge 13 in order to take it back to its employment position, as shown in Fig. 9.

Obviously, the rear portion of the body accomplished as indicated has a very simple structure and can be built at low cost though resulting in a sturdy and reliable structure.

In fact, the four-side structure accomplished through the assembly of the longitudinal members 2 and crossmembers 3 and 4 shows a high strength and represents an effective support for the panel 5, which is placed on them and forms the vehicle's rear platform, already provided with the seats where the fuel tank, the spare wheel, the glass washing device and the vehicle's tool kit are to be placed. Finally, the bumper can be accomplished in a very simple way by using partly the material of panel 5 (rear edge bent 11), and partly the body (rear crossmember 4): from the combination of such two structural elements there comes out a bumper which shows high deformability, due to the box-type rear edge 11, and a high strength due to the rear crossmember 4.

The parts making up the rear portion of the body, can be joined between each other in a simple and quick way by accomplishing, first the structure with a mechanical strength function, made by the longitudinal members 2, the crossmembers 3 and 4 and the side panels 1, such parts being connected between each other through regular welding operations; aside, a unit can be prepared which consists of panel 5, and those parts and devices that shall be supported by the panel itself (fuel tank, glass washing device, covering sheet, and the like). Such a unit can subsequently rest on the longitudinal members and crossmembers and locked in a whatever suitable way.

Obviously, changes and variations can be made to the shape and arrangement of the various parts referred to in the finding, without however coming out of the innovation domain.

## Claims

1. Body for a motor-vehicle comprising a rear end which includes a pair of side panels (1), a pair of longitudinal members (2) each of which is close to a pair of such side panels and is connected to the latter, a pair of crossmembers (3,4) substantially orthogonal to said longitudinal members one of which is arranged at the rear end and the other is arranged in the central portion of the body and a plastic panel (5) of substantially rectangular shape so arranged as to rest on said longitudinal members and said crossmembers to determine the rear end of the body platform, such a panel being provided with at least a first recess (6) suited to originate a housing for a spare wheel and a further recess (7) suited to originate a housing for a fuel tank.

2. Body according to the claim 1 characterized by the fact that such a panel shows a rear edge (11) bent into a box-like shape and so arranged as to rest on said crossmember to originate the vehicle's rear bumper.

3. Body according to the claim 1 characterized by the fact that on said panel further recesses (8,9) are obtained for the vehicle's tool kit and for the reservoir of the glass washer liquid.

4. Body according to one of the above claims, characterized by the fact that such a panel includes a seat (12) obtained from a single piece with the panel itself, said seat being connected to said panel by a deformable bridge (13), directly obtained from the panel, so as to be able to tilt over such a seat rotating it around said bridge and also to bring it over said panel into the employment position.

## Revendications

1. Carrosserie pour un véhicule à moteur, comportant une extrémité arrière qui comporte deux panneaux latéraux (1), deux éléments longitudinaux (2) dont chacun est adjacent à l'un de ces panneaux latéraux et lui est relié, deux éléments transversaux (3,4) pratiquement perpendiculaires aux éléments longitudinaux, l'un de ces éléments transversaux étant disposé à l'extrémité arrière et l'autre étant disposé dans la portion centrale de la carrosserie, et un panneau en matière plastique (5) de forme pratiquement rectangulaire, agencé pour reposer sur les éléments longitudinaux et sur les éléments transversaux pour déterminer l'extrémité arrière de la plate-forme de la carrosserie, ce panneau comportant au moins une première cavité (6) appropriée pour former un logement pour la roue de secours et une deuxième cavité (7) appropriée pour former un logement pour le réservoir de carburant.

2. Carrosserie selon la revendication 1, caractérisée en ce que ce panneau a un bord arrière (11) replié en forme de caisson et agencé pour reposer sur la traverse pour former le pare-choc arrière du véhicule.

3. Carrosserie selon la revendication 1, caractérisée en ce que le panneau comporte en outre des cavités (8,9) pour la trousse d'outils du véhicule et pour le réservoir du liquide du lave-glace.

4. Carrosserie selon l'une des revendications précédentes, caractérisée en ce que ce panneau comporte un siège (12) obtenu d'un seul tenant avec le panneau lui-même, ce siège étant relié au panneau par un pont déformable (13) obtenu directement à partir du panneau, de façon à pouvoir basculer ce siège en le faisant pivoter autour de ce pont pour l'amener sur le panneau dans sa position d'utilisation.

**Ansprüche**

1. Aufbau für ein Kraftfahrzeug mit einem hinteren Ende, das zwei Seitenplatten (1), zwei Längselemente (2), die jeweils nahe an den beiden Seitenplatten liegen und damit verbunden sind, zwei Querelementen (3, 4), die im wesentlichen senkrecht zu den Längselementen verlaufen und von denen eines am hinteren Ende und das andere am mittleren Teil des Aufbaus angeordnet ist, und mit einer Kunststoffplatte (5) mit im wesentlichen rechteckiger Form, die so angeordnet ist, daß sie auf den Längselementen und den Querelementen sitzt und dadurch das hintere Ende der Aufbauplattform bildet, wobei diese Platte wenigstens einer ersten Aussparung (6), die so ausgebildet ist, daß ein Gehäuse für ein Reserverad entsteht, und eine weitere Aussparung (7) aufweist, die so ausgebildet ist, daß sie ein Gehäuse für einen Kraftstofftank entsteht.

2. Aufbau nach Anspruch 1, dadurch gekennzeichnet, daß die Platte eine Hinterkante (11) aufweist, die kastenförmig gebogen und so angeordnet ist, daß sie auf dem Querelement sitzt, so daß sich die hintere Stoßstange des Fahrzeuges ergibt.

3. Aufbau nach Anspruch 1, dadurch gekennzeichnet, daß an der Platte weitere Aussparungen (8 und 9) für den Fahrzeugwerkzeugkasten und den vorratsbehälter für die Flüssigkeit der Scheibenwaschanlage vorgesehen ist.

4. Aufbau nach einem der vorherigen Ansprüche, dadurch gekennzeichnet, daß die Platte einen Sitz (12) aufweist, der in einem Stück mit der Platte selbst ausgebildet ist, wobei der Sitz mit der Platte über eine verformbare Brücke (13) verbunden ist, die direkt von der Platte erhalten wird, so daß der Sitz durch Schwenken um die Brücke umgekippt werden kann und gleichfalls über der Platte in die Benutzungslage gebracht werden kann.

Fig.1

## Fig. 3

IV →

IV →

## Fig. 2

III →

III →

## Fig. 4

EP 0 270 097 B1

Fig.6

Fig.5

Fig.7

EP 0 270 097 B1

Fig.11

Fig.10

Fig.9

Fig.8

8